# EUROPÄISCHE PATENTSCHRIFT

(11) **EP 1 258 392 B1**
(45) Veröffentlichungstag und Bekanntmachung des Hinweises auf die Patenterteilung: **08.12.2004**
(21) Anmeldenummer: 02010519.3
(22) Anmeldetag: 10.05.2002
(51) Int. Cl.: B60N 3/10

(54) **Gefässhalter, insbesondere als Innenausstattung für Fahrzeuge**
Container holder, especially for equipment of vehicle interior
Porte récipient, en particulier pour l'aménagement intérieur de véhicule

(30) Priorität: 17.05.2001 DE 10124024; 21.07.2001 DE 10135616
(43) Veröffentlichungstag der Anmeldung: 20.11.2002
(73) Patentinhaber: Weber GmbH & Co. KG Kunststofftechnik und Formenbau, 35683 Dillenburg (DE)
(72) Erfinder: Holzhauer, Ralf, 57520 Neunkhausen (DE)
(74) Vertreter: Müller, Eckhard, Dr.

(56) Entgegenhaltungen:
- EP-A- 1 065 103
- DE-A- 4 200 823
- DE-A- 19 935 144
- DE-U- 9 420 164
- GB-A- 2 321 388
- US-A- 5 170 980
- US-A- 5 997 082

## Beschreibung

Die Erfindung betrifft einen Gefäßhalter, insbesondere als Innenausstattung für Fahrzeuge, mit wenigstens einem um eine Schwenkachse an einem Gehäuse verschwenkbar gelagerten Deckel, der von einer im wesentlichen liegenden Schließstellung in eine im wesentlichen aufgerichtete Öffnungsstellung verschwenkbar ist, wobei an dem Deckel wenigstens eine verschwenkbare Halteklappe zur Halterung des Gefäßes angelenkt ist, und das Gehäuse als nach oben offene topf- oder wannenartige Aufnahme mit einer Aufstandsfläche und einer im wesentlichen umlaufenden oder ringartigen Gehäusewand ausgebildet ist

Derartige Gefäßhalter können ganz allgemein in Kraftfahrzeugen, Wohnwagen, Flugzeugen oder beispielsweise auch in Schiffen zum Einsatz kommen und dienen dazu, ein mitgeführtes Behältnis, wie eine Dose, einen Becher, eine Tasse, eine Flasche oder ein sonstiges Gefäß, zu haltern.

Ein Gefäßhalter gemäß dem Oberbegriff des Anspruches 1 ist aus der US-A- 5 997 082 bekannt.

Ein weiterer Gefäßhalter ist beispielsweise aus der DE 199 35 144 A bekannt, der in einer Mittelkonsole eines Kraftwagens unterbringbar ist. Der Halter mit einem flachen Gehäuse ausgebildet, an welchem zwei Deckel schwenkbar angebracht sind, zwischen die der Getränkebehälter, beispielsweise eine Getränkedose, ein Becher oder eine Tasse, einstellbar ist und dabei von den Deckeln gehalten wird. Um die beiden Deckel gegenläufig synchron zu verschwenken, sind diese über eine Koppelstange miteinander verbunden. Weiterhin sind an den Deckeln schwenkbar angebrachte, federbeaufschlagte Andruckklappen vorgesehen, welche über eine Steuerkurve in Richtung einer Deckelinnenseite verschwenken, wenn die Deckel in eine im wesentlichen liegende, das Gehäuse verschließende Stellung verschwenkt werden. Vorteil dieser Maßnahmen soll eine niedrige Bauhöhe des Gehäuses sein.

Ein weiterer Gefäßhalter ist bereits aus der DE 42 00 823 A1 bekannt, der neben der Halterung eines Gefäßes auch als Ablagefläche dienen soll. Hierzu ist vorgesehen, daß der Gefäßhalter mindestens zwei Halterungselemente aufweist, die in eine offene beziehungsweise in eine geschlossene Stellung verschwenkbar sind, wobei die Halterungselemente in der geschlossenen Stellung eine Ablagefläche bilden und in der offenen Stellung mit jeweils einer Aussparung zur Aufnahme des Gefäßes versehen sind.

Ein Getränkehalter für ein Kraftfahrzeug ist auch aus der japanischen Patentanmeldung mit der Publikationsnummer 08-002308 bekannt. Bei diesem Getränkehalter können zwei Deckel aus einer im wesentlichen liegenden Schließstellung in eine im wesentlichen aufgerichtete Öffnungsstellung verschwenkt werden, wobei an den Deckeln gelenkig miteinander verbundene Plattenstücke angelenkt sind, die kreisrunde Aufnahmeöffnungen für den Behälter bilden.

Sämtlichen Gefäßhalter nach den vorerwähnten Dokumenten zum Stand der Technik ist gemeinsam, daß die Deckel beziehungsweise Halterungselemente in der Schließstellung eine im wesentlichen zur Gehäusewandung ebene beziehungsweise bündige Ablagefläche bilden, so daß zwar Gegenstände auf die geschlossenen Halterungselemente beziehungsweise Deckel ablegbar sind, sofern der Gefäßhalter nicht zur Aufnahme eines Getränkebehälters oder dergleichen dient. Allerdings besteht gerade bei dem Einsatz eines solchen Gefäßhalters in Fahrzeugen, beispielsweise Kraftfahrzeugen, das Problem, daß die auf dem oder den in der Schließstellung befindlichen Deckel abgelegten Gegenstände abrutschen und nicht stabil ablegbar sind.

Eine weitere Aufnahme für einen Getränkebehälter ist aus der EP 0 800 954 A2 bekannt. Diese Behälteraufnahme für den Getränkebehälter weist Haltebacken auf, die von einem Federelement in die Behälteraufnahme hineingedrückt werden. Um Getränkebehältern mit verschiedenen Durchmessern sicheren Halt zu geben, weisen die Haltebacken Halteflächen mit unterschiedlichen radialen Abständen zur Mitte der Behälteraufnahme auf. Ferner sind die Haltebacken mit einem Schwenk- und Linearlager an der Aufnahme angebracht. Als nachteilig erweist es sich bei dieser Aufnahme, daß ihr keine weitere Funktion zugeordnet werden kann, wenn ein Behälter in der Aufnahme nicht aufgenommen ist.

Demgegenüber liegt der vorliegenden Erfindung die Aufgabe zugrunde, einen Gefäßhalter für ein in einem Fahrzeug mitzuführendes Behältnis bereitzustellen, bei dem die Aufnahme dann, wenn ein Behältnis oder Gefäß in ihr nicht aufgenommen ist, zusätzlich als Ablagefach für die verschiedensten Utensilien genutzt werden kann, wobei diese Utensilien sicher in dem Auflagefach aufgenommen sind.

Diese Aufgabe wird durch einen Gefäßhalter mit den Merkmalen des Anspruches 1 gelöst. Vorteilhafte Ausgestaltungen finden sich in den Unteransprüchen.

Nach der Erfindung liegt der Deckel in seiner Schließstellung der Aufstandsfläche des Gehäuses, bevorzugt unter Zwischenlage der Halteklappe, im wesentlichen auf. In der Schließstellung ist der Deckel in der topf- oder wannenförmigen Aufnahme aufgenommen und bildet einen Boden zur Aufnahme, der als Ablage nutzbar ist. Aufgrund dieser Maßnahmen kann der Gefäßhalter dann, wenn ein Gefäß nicht in ihm aufgenommen ist, als Ablagefach verwendet werden, da der in der Schließstellung befindliche Deckel der Aufstandsfläche des Gehäuses im wesentlichen flach aufliegt und das Gehäuse selbst als nach oben offene topf- oder wannenartige Aufnahme ausgebildet ist, so daß in das Gehäuse Utensilien, wie beispielsweise eine Brille, Feuerzeuge, Kugelschreiber oder dergleichen abelegt werden können. Sofern der Gefäßhalter nicht als Ablagefach sondern als Aufnahme für ein Gefäß dienen soll, wird der Deckel aus der im wesentlichen liegenden Schließstellung in eine im wesentlichen aufgerichtete Öffnungsstellung verschwenkt, so daß das Behältnis beziehungsweise Gefäß auf die Aufstandsfläche des Gehäuses aufsetzbar ist, wobei das Gefäß oder Behältnis von der Halteklappe am Deckel gehalten wird.

Nach einer ersten vorteilhaften Ausführungsform der Erfindung wird das Gefäß oder Behältnis mittels der Halteklappe und der der Halteplatte gegenüberliegenden Gehäusewand des Gehäuses gehalten, sofern der Deckel sich in der Öffnungsstellung befindet. Mittels der verschwenkbaren Halteklappe wird das Behältnis, beispielsweise eine Dose, gegen die feste Wand des Gehäuses gedrückt, wobei diese Wand ein festes Gegenlager bildet. Die verschwenkbare Halteklappe sorgt beispielsweise mittels einer Federvorspannung zum einen für eine Anpassung an den Durchmesser des Behältnisses und zum anderen für einen gewissen Anpreßdruck zur sicheren Halterung des Gefäßes. Im übrigen ist zur Halterung eines Gefäßes von Vorteil lediglich eine einzige Halteklappe vorgesehen, wodurch gegenüber verschiedenen Ausführungsformen des Standes der Technik eine einfachere konstruktive und damit kostengünstige Ausgestaltung erzielt wird.

Nach einer anderen äußerst vorteilhaften Weiterbildung der Erfindung sind an dem Gefäßhalter zwei Deckel vorgesehen, die im wesentlichen mittig an dem Gehäuse verschwenkbar gelagert sind. In ihren Öffnungsstellungen sind die Deckel in der aufgerichteten Position eng oder dicht benachbart zueinander in der Mitte des Gehäuses angeordnet, wobei die Halteklappe eines jeden Deckels seitlich nach außen weisend von dem jeweiligen Deckel weg ragt. Der Gefäßhalter nach dieser besonders vorteilhaften, eigenständigen Ausführungsform der Erfindung weist eine äußerst große Variabilität auf. Zum einen können sich beide Deckel in der Schließstellung befinden, so daß in dem topf- oder wannenartigen Gehäuse auch eine Mehrzahl von Utensilien oder Utensilien größerer Abmessungen abgelegt werden können. Sofern der Gefäßhalter lediglich ein Behältnis aufnehmen soll, kann einer der beiden Deckel in die aufgerichtete Öffnungsstellung überführt werden, so daß dann das Behältnis mittels der Halteklappe dieses geöffneten Deckels und der zugeordneten Gehäusewand gehalten werden kann. Der zweite Deckel befindet sich weiterhin in der Schließstellung, so daß der ein Gefäß aufnehmende Gefäßhalter gleichzeitig ein Aufnahmefach bildet. Das Aufnahmefach weist etwa die halbe Größe des Aufnahmefachs auf, welches dann von dem Gefäßhalter gebildet ist, wenn sich beide Deckel in der Schließstellung befinden. Schließlich können auch beide Deckel in die Öffnungsstellung überführt werden, so daß zwischen der Halteklappe eines jeden Deckels und der zugeordneten Gehäusewand jeweils ein Behältnis, also insgesamt zwei Behältnisse, aufgenommen und sicher gehalten werden können.

Weiterhin besteht nach einer anderen Ausgestaltung der Erfindung die Möglichkeit, den Deckel in der Schließstellung mittels einer Verriegelungsvorrichtung zu verriegeln, wobei ein Entriegelungsmechanismus vorgesehen ist, bei dessen Betätigung der Deckel aus der Schließstellung in die Öffnungsstellung überführbar ist. Dieser Verriegelungsbeziehungsweise Entriegelungsmechanismus kann beispielsweise durch eine Push-Mechanik mit einer Herzkurvensteuerung oder dergleichen oder durch eine Entriegelungstaste gebildet werden.

Bevorzugt wird der Entriegelungsmechanismus nach einer vorteilhaften Ausgestaltung der Erfindung durch ein Betätigungselement sowie gegebenenfalls ein oder mehrere Hebel und eine Nase gebildet, die in einer Verriegelungshalterung des Deckels eingreift. Von Vorteil ist das Betätigungselement als Taste ausgebildet, die leicht versenkt in der Kontur des Gehäuses beziehungsweise der Gehäusewand angeordnet ist, so daß eine unbeabsichtigte Betätigung des Entriegelungsmechanismus weitestgehend ausgeschlossen ist.

Von Vorteil ist nach einer weiteren Ausgestaltung der Erfindung die Halteklappe um eine Achse verschwenkbar am Deckel, bevorzugt der Unterseite des Deckels, angelenkt, wobei dieser Achse im wesentlichen parallel zur Schwenkachse des Deckels angeordnet beziehungsweise ausgerichtet ist. Es liegt jedoch auch im Rahmen der Erfindung, an dem Deckel zwei oder mehrere verschwenkbare Halteklappen anzulenken, wobei die Schwenkachsen der Halteklappen gegebenenfalls spitzwinklig zur Schwenkachse des Deckels angeordnet sind. Auch können die eine oder mehreren Halteklappen gegebenenfalls zusätzlich um eine weitere Schwenkachse schwenkbar am Deckel angelenkt sein, wobei diese weitere Schwenkachse im wesentlichen rechtwinklig zur Schwenkachse des Deckels ausgerichtet ist. Die spezielle konstruktive Art der schwenkbaren Anlenkung der Halteklappe oder Halteklappen am Deckel wird auch dadurch beeinflußt, daß bei in der Schließstellung befindlichem Deckel die Halteklappe bevorzugt der Unterseite des Deckels dicht anliegt, so daß der Bauraum der Deckel-Halteklappenkonstruktion gering ist und ein ausreichender Stauraum in dem Aufnahmefach bereitgestellt wird. Eine andere Randbedingung hinsichtlich der Anlenkung der Halteklappe am Deckel besteht auch darin, daß die eine oder mehreren Halteklappen beim Überführen des Deckels von der Öffnungsstellung in die Schließstellung problemlos in eine bevorzugt der Deckelunterseite anliegende Position überführt werden.

Von Vorteil sind der Deckel und/oder die Halteklappe von einer Federvorspannung beaufschlagt, die den Deckel von der Schließstellung in die Öffnungsstellung und/oder die Halteklappe von einer dem Deckel anliegenden Position in eine vom Deckel seitlich abstehende Position überführt. Aufgrund dieser Maßnahme ist ein äußerst einfaches Überführen des Gefäßhalters von der Funktion Ablagefach", in der sich der Deckel in der Schließstellung befindet, in die Funktion "Gefäßhalter", in der sich der Deckel in der Öffnungsposition befindet, möglich, indem einfach beispielsweise das Betätigungselement des Entriegelungsmechanismus betätigt wird. Nach Betätigung dieses Elements oder dieser Taste werden dann der Deckel wie auch die Halteklappe aufgrund der Federvorspannung automatisch in die Öffnungsstellung beziehungsweise Halteposition überführt. Es versteht sich, daß dieser Bewegungsvorgang von Deckel und/oder Halteklappe beispielsweise mittels einer Reibungsbremse oder dergleichen verzögert durchgeführt werden kann.

Nach einer weiteren vorteilhaften Ausgestaltung der Erfindung ist es vorgesehen, daß die Halteklappe mittels einer Zwangssteuerung beziehungsweise -führung von der seitlich abstehenden Position in die dem Deckel, insbesondere der Deckelunterseite anliegende Position überführbar ist. Dies kann beispielsweise dadurch realisiert werden, daß die Halteklappe entlang einer Steuerkurve am Gehäuse in die dem Deckel anliegende Position überführt wird.

Bevorzugt ist die verschwenkbare Halteklappe nach einer anderen Ausgestaltung der Erfindung über einen Koppelmechanismus kinematisch mit dem verschwenkbaren Deckel gekoppelt, wobei ein Verschwenken des Deckels von der Öffnungsstellung in die Schließstellung die Halteklappe von der seitlich abstehenden Position in die dem Deckel anliegende Position überführt.

Der Koppelmechanismus ist nach einer bevorzugten Ausführungsform der Erfindung durch einen Hebel sowie einen Stößel gebildet.

Dabei bietet es sich an, daß der Hebel einends an dem Gehäuse und anderenends an dem Stößel angelenkt ist, welcher verschiebbar an einer Unterseite des Deckels geführt ist. Es versteht sich, daß der Hebel verschwenkbar bezüglich des Gehäuses und der Stößel gelenkig mit dem Hebel verbunden ist.

Das freie Ende des Stößels greift nach einer anderen vorteilhaften Weiterbildung der Erfindung an einem Hebelarm der Halteplatte an, wobei der Hebelarm bevorzugt ein Rollelement oder dergleichen aufweist. Der Hebelarm bildet dabei den einen Arm eines zweiseitigen Hebels, wobei der andere Arm durch die eigentliche Halteplatte gebildet wird. Zwischen dem Hebelarm und der Halteplatte ist die Schwenkachse für die Halteplatte angeordnet.

Dieser Koppelmechanismus zeichnet sich insbesondere dadurch aus, daß ein Abrieb an sichtbaren Teilen aufgrund von Zwangsführungen oder dergleichen nicht zu erwarten ist. Des weiteren sind auch die Reibungskräfte bei Einsatz des Koppelmechanismus weitestgehend reduziert, so daß sich der Deckel zusammen mit der Halteklappe sehr leicht mit der Hand des Benutzers von der Öffnungsstellung in die Schließstellung überführen läßt.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung.

Es zeigen:
- Figur 1: eine Ausführungsform einer erfindungsgemäßen Aufnahme mit in Schließstellung befindlichen Deckeln in einer Draufsicht,

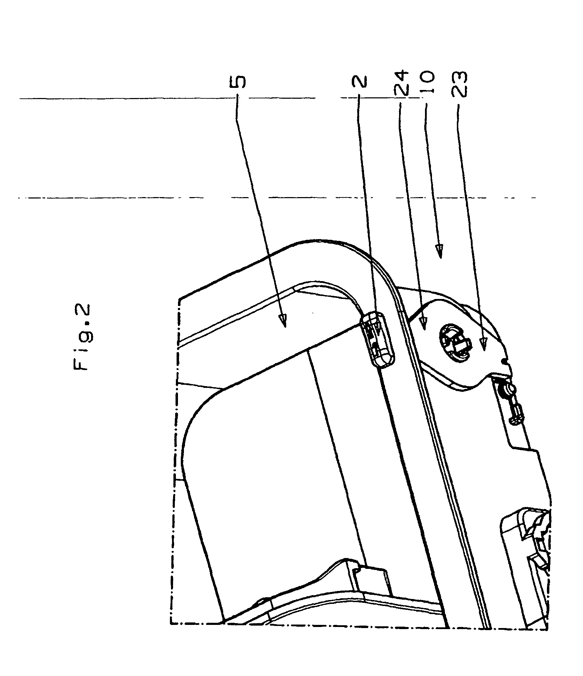

- Figur 2: eine vergrößerte Darstellung des Außenbereichs der Aufnahme im Bereich eines Betätigungselementes zum Lösen der Schließstellung,

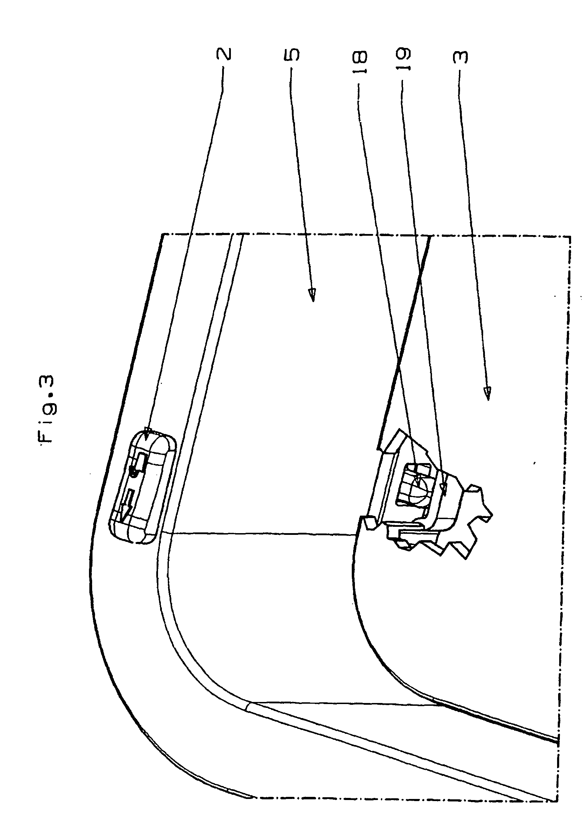

- Figur 3: eine vergrößerte Darstellung des Innenbereiches der Aufnahme im Bereich des Betätigungselementes,
- Figur 4: die Aufnahme gemäß Figur 1, mit einem in Öffnungsstellung und einem in Schließstellung befindlichen Deckel,
- Figur 5: die Aufnahme gemäß Figur 1 mit beiden Deckeln in Öffnungsstellung,
- Figur 6: eine vergrößerte Darstellung einer Deckelunterseite ohne Halteklappe,

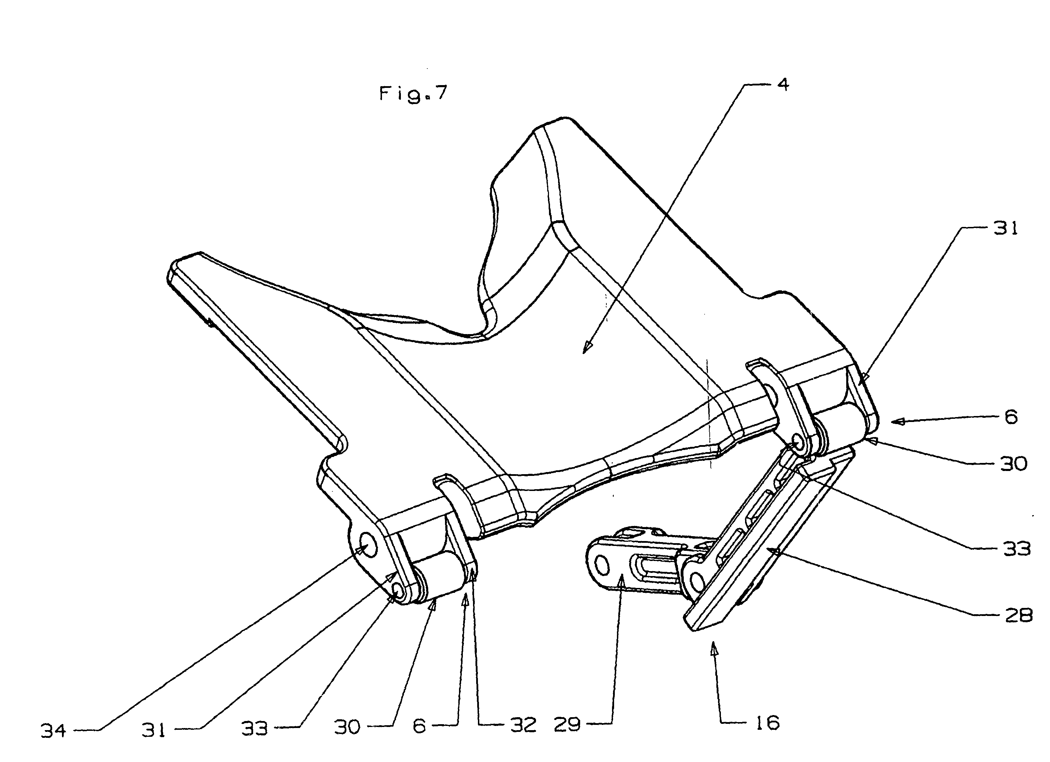

- Figur 7: eine vergrößerte Darstellung einer Halteklappe und

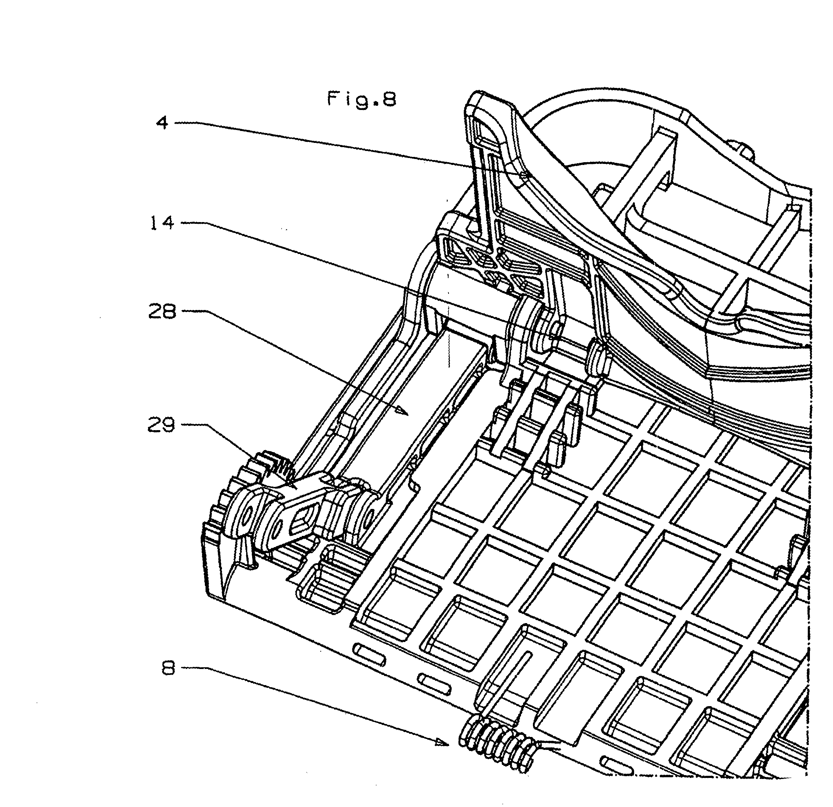

- Figur 8: die Darstellung einer Deckelunterseite mit Halteklappe.

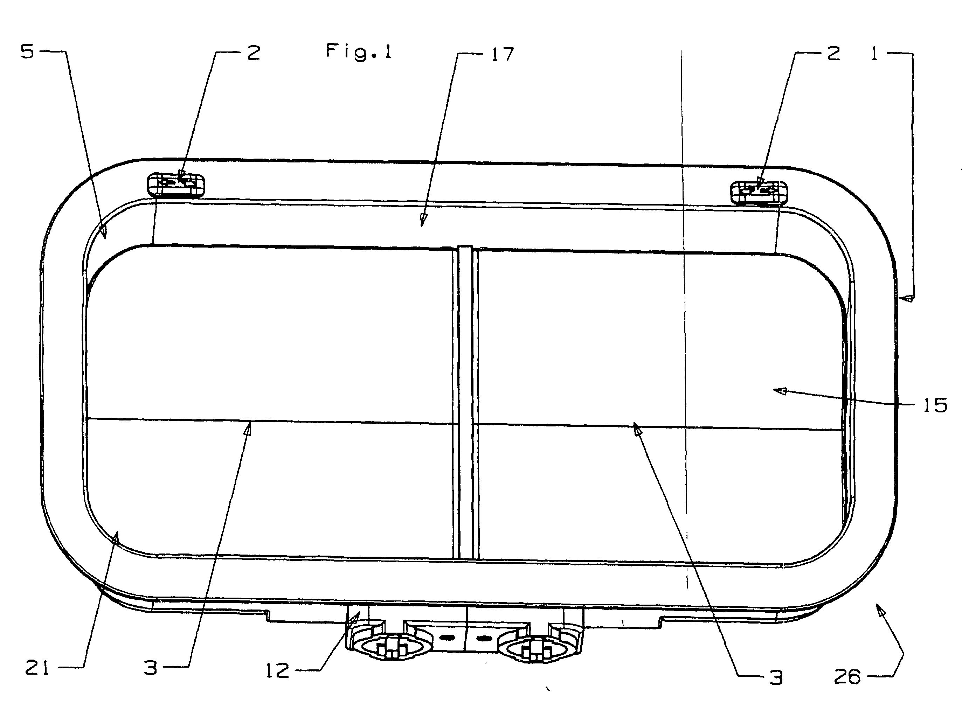

In Figur 1 ist die Aufnahme 1 in eine Mittelkonsole 26 eines Kraftfahrzeuges eingebaut. Zu erkennen ist die umlaufende Gehäusewand 17 der Aufnahme 1 mit in einer Schließstellung 21 befindlichen Deckeln 3. Die Deckel 3 bilden in dieser Schließstellung einen Boden, der als Ablage 15 für die verschiedensten Utensilien genutzt werden kann.

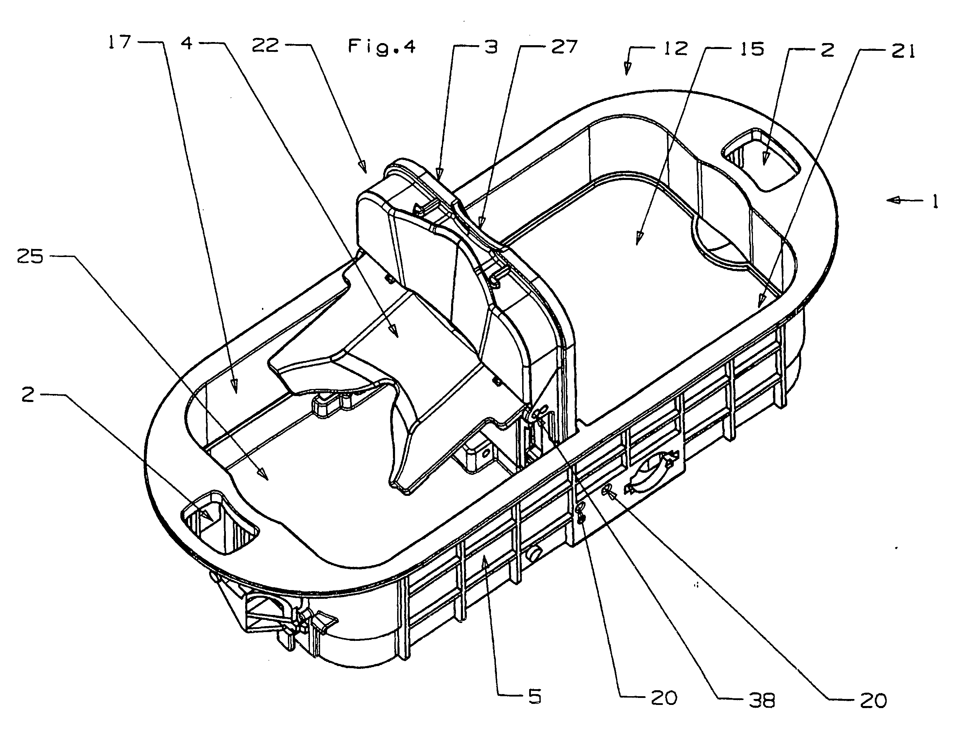

Die zweite Funktion der Aufnahme 1 ist in Figur 4 dargestellt. Dabei ist ein Deckel 3 in seine Öffnungsstellung 22 verschwenkt. In dieser Stellung kann ein Behältnis auf einer Aufstandfläche 25 der Aufnahme 1 abgestellt werden. Durch ein Klemmelement oder Halteklappe 4, das an einer Außenwandung des Behältnis oder Gefäßes anliegt, wird das Behältnis sicher in der Aufnahme 1 fixiert.

Um die Deckel 3 aus der Schließstellung 21 in die Öffnungsstellung 22 zu überführen, ist jedem Deckel 3 mindestens eine Öffnungsfeder 8 zugeordnet. Die Federvorspannung wird dadurch erzeugt, daß sich das eine abgewinkelte Ende einer Feder 8 an der Aufstandsfläche 25 und das andere Ende am Deckel 3 abstützt. Die Federn 8 sind auf einer Achse 20 angeordnet, um die der Deckel 3 beim Überführen von der Schließstellung 21 in die Öffnungsstellung 22 schwenkt.

In der Schließstellung 21 sind die Deckel 3 durch eine Nase 18, die in eine Verriegelungshalterung 19 des Deckels 3 eingreift, gegen die Kraft der Öffnungsfeder 8 gehalten. Mittels eines Entriegelungsmechanismus 10 wird die Nase 18 aus der Verriegelungshalterung 19 herausgeführt, so daß der den Boden bildende Deckel 3 aus der Schließstellung in die Öffnungsstellung 22 überführt wird. Der Entriegelungsmechanismus 10 besteht im wesentlichen aus einem Betätigungselement 2, einem ersten Hebel 24, einem zweiten Hebel 23, der Nase 18 und der Verriegelungshalterung 19.

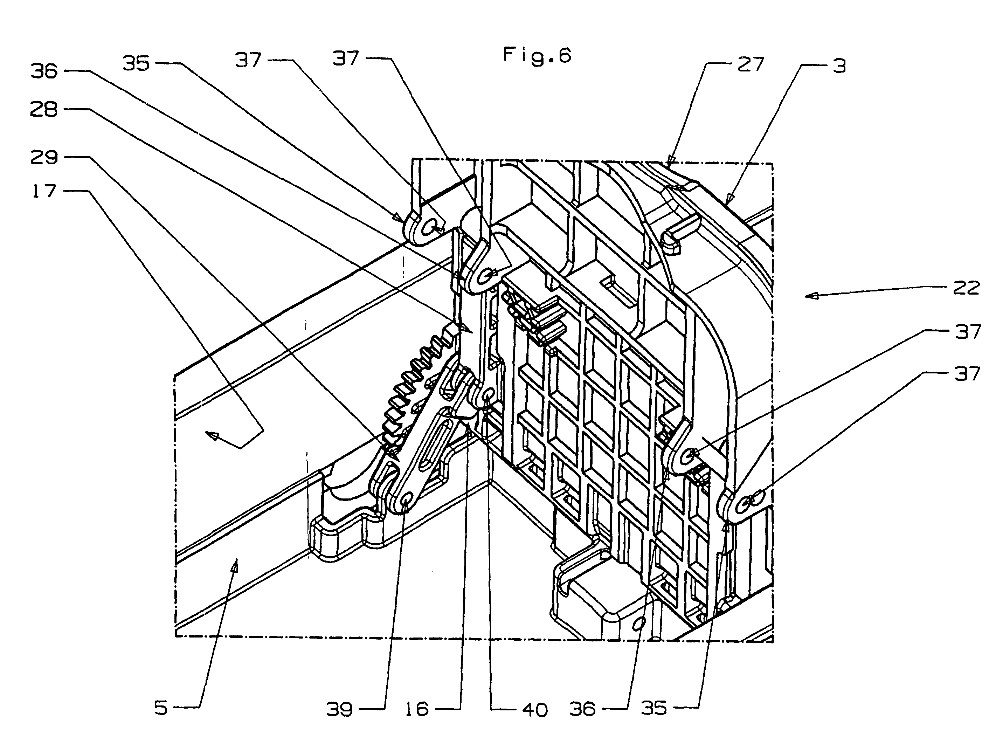

Die Klemmelemente beziehungsweise Halteklappen 4 zum Fixierung der Behältnisse sind an der Rückseite des jeweiligen Deckels 3 schwenkbar um eine Achse 38 schwenkbar gelagert. Dazu sind, wie aus Figur 6 ersichtlich, an der Rückseite der Deckel 3 Halterungen 35, 36 angebracht, in denen ein in Figur 6 nicht dargestellter Stift fixiert wird. Der Stift greift durch Lageraugen 34 der Halteklappe sowie durch Lageraugen 37 des Deckels 3.

In der Schließstellung 21 des Deckels 3 befindet sich die Halteklappe 4 eingeklappt an der Rückseite des Deckels 3 nächstliegend der Aufstandsfläche 25. Durch Betätigen des Entriegelungsmechanismus 10 wird der Öffnungsvorgang des entsprechenden Deckels 3 eingeleitet. Beim Öffnen des Deckels 3 verschwenkt die an der Rückseite des Deckels 3 anliegenden Halteklappe 4 um die Achse 38 aufgrund einer Federvorspannung mindestens einer Feder 14 zum Inneren der Aufnahme 1 hin. Das Verschwenken des Deckels 3 ist durch einen nicht dargestellten Anschlag begrenzt, so daß die Öffnungsposition 22 des Deckels 3 im wesentlichen senkrecht zur Schließposition des Deckels 3 liegt.

Die Federvorspannung des Klemmelementes beziehungsweise Halteklappe 4 dient zudem dazu, daß diese dann, wenn ein Behältnis in der Aufnahme 1 aufgenommen ist, zu jeder Zeit Kontakt zu der Gehäusewandung 17 des Behältnisses hat. Dadurch ist eine sichere Fixierung des Behältnisses in der Aufnahme 1 gewährleistet.

Beim Schließen des Deckels 3 wird die Halteklappe 4 entgegen der Kraft der Feder 14 von der Halte- oder Klemmstellung, in welcher die Halteklappe 4 in das Innere der Aufnahme hin weist beziehungsweise seitlich vom Deckel 3 absteht, an die Deckelrückseite des Deckels 3 verschwenkt, wobei der Deckel 3 entgegen der Kraft der Feder 8 in die Schließposition 21 gemäß Figur 1 geklappt wird.

Um ein sicheres Schließen des Deckels 3 und Verschwenken der Halteklappe 4 zu gewährleisten, ist ein Hebel 29 vorgesehen, der an seinem einen Ende über eine Achse 39 schwenkbar an der Gehäusewand 17 gelagert ist. Das andere Ende des Hebels 29 ist schwenkbar über eine Achse 40 an einem Ende eines Stößels 28 angelenkt. Der Stößel 28 wiederum ist verschiebbar an der Rückseite des Deckels 3 geführt. Während des Schließvorgangs wird der Hebel 29 um die Achse 39 verschwenkt. Dabei verschiebt er den Stößel 28 an der Rückseite des Deckels 3 nach oben, so daß das freie Ende des Stößels 28 an dem als Hebelarm 6 wirkenden Rand oder Ende der Halteklappe 4 angreift und ein Verschwenken des Klemmelementes beziehungsweise der Halteklappe 4 einleitet. Der Stößel 28 und das als Hebelarm 6 wirkende Ende des Deckels sind so ausgebildet, daß die Halteklappe 4 bei einem Schließvorgang des Deckels 3 im wesentlichen vollständig an der Rückseite des Deckels 3 zum Liegen kommt, bevor der Deckel 3 seine Schließposition 21 erreicht hat. Hierdurch wird einem Verklemmen des Deckels 3 mit den Aufstandsflächen 25 vermieden.

In diesem Ausführungsbeispiel besteht der Hebelarm 6 aus Haltearmen 31, 32 und einem Rollelement 30, das mittels eines Stiftes 33 drehbar zwischen den Haltearmen 31, 32 gelagert ist. Durch das Verschieben des Stößels 28 an der Unterseite des Deckels 3 rollt das Rollelement 30 an dem Stößel 28 ab und leitet das Verschwenken der Halteklappe 4 zur Rückseite des Deckels 3 ein. Der so ausgebildete Hebelarm 6 bietet bei der Schließ- und Öffnungsbewegung wenig Reibungswiderstand und reduziert somit auch den Verschließ der Einzelteile. Dadurch ist auch eine längere Lebenszeit gewährleistet.

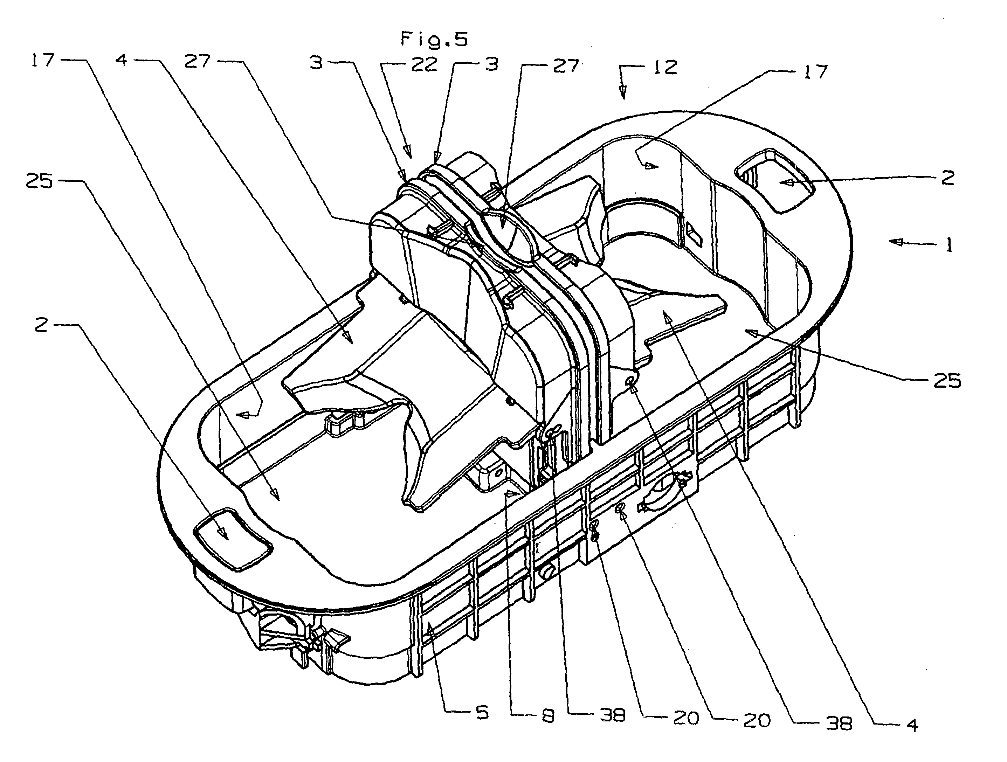

Zur Erleichterung des Schließvorgangs ist an der Deckeloberseite eine Griffmulde 27 angebracht, die insbesondere das Schließen erleichtert, wenn, wie im vorliegenden Ausführungsbeispiel gemäß Figur 5, beide Deckel geöffnet sind.

Die Anordnung des Betätigungsmechanismus mit Stößel 28, Hebel 29 und Hebelarm 6 kann für jedes Klemmelement beziehungsweise jede Halteklappe 4 jeweils zu beiden Seiten an der Gehäusewand 17 angeordnet sein. Eine funktionsfähige Ausführungsform kann aber auch mit nur einem Betätigungsmechanismus pro Deckel erreicht werden.

Das vorliegende Ausführungsbeispiel ist zum Abstellen zweier Behältnisse gedacht. Es ist aber auch möglich, eine Aufnahme 1 mit nur einem einzigen Deckel 3 zu versehen.

### Bezugszeichenliste

- 1: Aufnahme
- 2: Betätigungselement
- 3: Deckel
- 4: Halteklappe
- 5: Gehäuse
- 6: Hebelarm
- 8: Öffnungsfeder
- 10: Entriegelungsmechanismus
- 12: Gefäßhalter
- 14: Feder
- 15: Ablage
- 16: Koppelmechanismus
- 17: Gehäusewand
- 18: Nase
- 19: Verriegelungshalterung
- 20: Achse
- 21: Schließstellung
- 22: Öffnungsstellung
- 23: 2. Hebel
- 24: 1. Hebel
- 25: Aufstandsfläche
- 26: Mittelkonsole
- 27: Griffmulde
- 28: Stößel
- 29: Hebel
- 30: Rollenelement
- 31: Haltearm
- 32: Haltearm
- 33: Stift
- 34: Lagerauge
- 35: Halterung
- 36: Halterung
- 37: Lagerauge
- 38: Achse
- 39: Achse
- 40: Achse

## Patentansprüche

1. Gefäßhalter, insbesondere als Innenausstattung für Fahrzeuge, mit wenigstens einem um eine Schwenkachse (20) an einem Gehäuse (5) verschwenkbar gelagerten Deckel (3), der von einer im wesentlichen liegenden Schließstellung (21) in eine im wesentlichen aufgerichtete Öffnungsstellung (22) verschwenkbar ist, wobei an dem Deckel (3) wenigstens eine verschwenkbare Halteklappe (4) zur Halterung des Gefäßes angelenkt ist, und das Gehäuse (5) als nach oben offene topf- oder wannenartige Aufnahme mit einer Aufstandsfläche (25) und einer im wesentlichen umlaufenden oder ringartigen Gehäusewand (17) ausgebildet ist, **dadurch gekennzeichnet, dass** der Deckel (3) in seiner Schließstellung (21) auf der Aufstandsfläche (25) des Gehäuses (5), bevorzugt unter Zwischenlage der Halteklappe (4), im wesentlichen aufliegt und in der Schließstellung in der topfoder wannenförmigen Aufnahme aufgenommen ist und einen Boden zur Aufnahme bildet, der als Ablage (15) nutzbar ist.

2. Gefäßhalter nach Anspruch 1, **dadurch gekennzeichnet, daß** die Halteklappe (4) und die Gehäusewand (17) bei in Öffnungsstellung (22) befindlichem Deckel ein in die Aufnahme eingebrachtes, der Aufstandsfläche aufsitzendes Gefäß klemmend halten.

3. Gefäßhalter nach einem der vorhergehenden Ansprüche, **dadurch gekennzeichnet, daß** zwei Deckel (3) im wesentlichen mittig an dem Gehäuse (5) verschwenkbar gelagert sind, die in ihren Öffnungsstellungen (22) eng benachbart zueinander angeordnet sind, wobei die Halteklappe (4) eines jeden Deckels (3) seitlich nach außen weisend von dem Deckel (3) weg ragt.

4. Gefäßhalter nach einem der vorhergehenden Ansprüche, **dadurch gekennzeichnet, daß** der Deckel (3) in der Schließstellung (21) verriegelbar und mittels eines Entriegelungsmechanismus (10) aus der Schließstellung (21) in die Öffnungsstellung (22) überführbar ist.

5. Gefäßhalter nach Anspruch 4, **dadurch gekennzeichnet, daß** der Entriegelungsmechanismus (10) ein Betätigungselement (2), wenigstens einen Hebel (23, 24) sowie eine Nase (18) aufweist, die in eine Verriegelungshalterung (19) des Deckels (3) eingreift.

6. Gefäßhalter nach einem der vorhergehenden Ansprüche, **dadurch gekennzeichnet, daß** die Halteklappe (4) um eine Achse (38) verschwenkbar am Deckel (3) angelenkt ist, die im wesentlichen parallel zur Schwenkachse (20) des Deckels (3) angeordnet ist.

7. Gefäßhalter nach einem der vorhergehenden Ansprüche, **dadurch gekennzeichnet, daß** Deckel (3) und/oder Halteklappe (4) von einer Federvorspannung beaufschlagt sind, die den Deckel (3) von der Schließstellung (21) in die Öffnungsstellung (22) und/oder die Halteklappe (4) von einer dem Deckel (3) anliegenden Position in eine vom Deckel (3) seitlich abstehende Position überführen.

8. Gefäßhalter nach einem der vorhergehenden Ansprüche, **dadurch gekennzeichnet, daß** die Halteklappe (4) mittels einer Zwangssteuerung beziehungsweise -führung von der seitlich abstehenden Position in die dem Deckel (3) anliegende Position überführbar ist.

9. Gefäßhalter nach einem der vorhergehenden Ansprüche, **dadurch gekennzeichnet, daß** die verschwenkbare Halteklappe (4) über einen Koppelmechanismus (16) mit dem verschwenkbaren Deckel (3) gekoppelt ist, wobei ein Verschwenken des Deckels (3) von der Öffnungsstellung (22) in die Schließstellung (21) die Halteklappe (4) von der seitlich abstehenden Position in die dem Deckel (3) anliegende Position überführt.

10. Gefäßhalter nach Anspruch 9, **dadurch gekennzeichnet, daß** der Koppelmechanismus (16) durch einen Hebel (29) und einen Stößel (28) gebildet ist.

11. Gefäßhalter nach Anspruch 10, **dadurch gekennzeichnet, daß** der Hebel (29) einends an dem Gehäuse (5) und anderenends an dem Stößel (28) angelenkt ist, welcher verschiebbar an einer Unterseite des Deckels (3) geführt ist.

12. Gefäßhalter nach Anspruch 10 oder 11, **dadurch gekennzeichnet, daß** das freie Ende des Stößels (28) an einem Hebelarm (6) der Halteplatte (4) angreift und der Hebelarm (6) bevorzugt ein Rollelement (30) aufweist.

## Claims

1. Vessel holder, particularly as an internal fitting for vehicles, with at least one lid (3) which is mounted to be pivotable about a pivot axle (20) at the housing (5) and which is pivotable from a substantially horizontal closed setting (21) to a substantially upright open setting (22), wherein at least one pivotable holding flap (4) for holding the vessel is articulated to the lid (3) and the housing (5) is constructed as an upwardly open pot-like or tub-like receptacle with a support surface (25) and a substantially encircling or annular housing wall (17), **characterised in that** the lid (3) in its closed setting (21) substantially lies on the support surface (25) of the housing (5), preferably with interposition of the holding flap (4), and in the closed setting is received in the pot-shaped or tub-shaped receptacle and forms a base, which is usable as a deposit place (15), for the receptacle.

2. Vessel holder according to claim 1, **characterised in that** the holding flap (4) and the housing wall (17) hold a vessel, which is introduced into the receptacle and rests on the support surface, in clamping manner when the lid is disposed in the open setting (22).

3. Vessel holder according to one of the preceding claims, **characterised in that** two lids (3) are pivotably mounted substantially centrally at the housing (5) and are arranged in their opening settings (22) to be closely adjacent to one another, wherein the holding flap (4) of each lid (3) projects laterally outwardly to face away from the lid (3).

4. Vessel holder according to one of the preceding claims, **characterised in that** the lid (3) is lockable in the closed setting (21) and is transferrable from the closed setting (21) to the open setting (22) by means of an unlocking mechanism (10).

5. Vessel holder according to claim 4, **characterised in that** the unlocking mechanism (10) comprises an actuating element (2), at least one lever (23, 24) and a lug (18), which engages in a lock retainer (19) of the lid (3).

6. Vessel holder according to one of the preceding claims, **characterised in that** the holding flap (4) is articulated to the lid (3) to be pivotable about an axle (38) arranged substantially parallel to the pivot axis (20) of the lid (3).

7. Vessel holder according to one of the preceding claims, **characterised in that** the lid (3) and/or holding flap (4) is or are loaded by a spring bias which transfers the lid (3) from the closed setting (21) to the open setting (22) and/or transfers the holding flap (4) from a position bearing against the lid (3) to a position laterally protruding from the lid (3).

8. Vessel holder according to one of the preceding claims, **characterised in that** the holding flap (4) is transferrable from the laterally protruding position to the position bearing against the lid (3) by means of a positive control or positive guide.

9. Vessel holder according to one of the preceding claims, **characterised in that** the pivotable holding flap (4) is coupled with the pivotable lid (3) by way of a coupling mechanism (16), wherein a pivotation of the lid (3) from the open setting (22) to the closed setting (21) transfers the holding flap (4) from the laterally protruding position to the position bearing against the lid (3).

10. Vessel holder according to claim 9, **characterised in that** the coupling mechanism (16) is formed by a lever (29) and a ram (28).

11. Vessel holder according to claim 10, **characterised in that** the lever (29) is articulated at one end to the housing (5) and at the other end to the ram (28), which is guided to be displaceable at an underside of the lid (3).

12. Vessel holder according to claim 10 or 11, **characterised in that** the free end of the ram (28) engages at a lever arm (6) of the holding plate (4) and the lever arm (6) preferably has a roller element (30).

## Revendications

1. Dispositif de retenue de récipient, agencé notamment en tant qu'équipement intérieur pour véhicules, comportant au moins un couvercle (3) monté sur un boîtier (5) de manière à pouvoir pivoter autour d'un axe de pivotement (20) et qui peut pivoter depuis une position fermée (21) essentiellement horizontale pour venir dans une position ouverte (22) essentiellement redressée, dans lequel au moins un volet de retenue (4) pour retenir le récipient est articulé sur le couvercle (3), et le boîtier (5) est agencé sous la forme d'un logement en forme de pot ou de cuvette ouvert vers le haut et comportant une surface d'appui (25) et une paroi de boîtier (17) sensiblement circonférentielle ou de forme annulaire, **caractérisé en ce que** dans sa position fermée (21), le couvercle (3) est essentiellement en appui sur la surface d'appui (25) du boîtier (5), de préférence moyennant l'interposition du volet de retenue (4) et, dans la position fermée, est logé dans le logement en forme de pot ou de cuvette et forme un fond pour le logement, qui peut être utilisé en tant que zone de rangement (15).

2. Dispositif de retenue de récipient selon la revendication 1, **caractérisé en ce que** le volet de retenue (4) et la paroi (17) du boîtier retiennent à l'état serré, lorsque le couvercle est dans la position ouverte (22), un récipient qui est inséré dans le logement et est en appui sur la surface d'appui.

3. Dispositif de retenue pour récipient selon l'une des revendications précédentes, **caractérisé en ce que** deux couvercles (3), qui dans leurs positions ouvertes (22) sont disposés en étant étroitement voisins l'un de l'autre, sont montés de manière à pouvoir pivoter, essentiellement en position centrée, sur le boîtier (5), le volet de retenue (4) de chaque couvercle (3) faisant saillie latéralement vers l'extérieur à partir du couvercle (3).

4. Dispositif de retenue pour récipient selon l'une des revendications précédentes, **caractérisé en ce que** le couvercle (3) peut être verrouillé dans la position fermée (21) et peut être transféré de la position fermée (21) dans la position ouverte (22) au moyen d'un mécanisme de déverrouillage (10).

5. Dispositif de retenue pour récipient selon la revendication 4, **caractérisé en ce que** le mécanisme de déverrouillage (10) comporte un élément d'actionnement (2), au moins un levier (23, 24) ainsi qu'un ergot (18), qui s'engage dans un dispositif de retenue de verrouillage (19) du couvercle (3).

6. Dispositif de retenue pour récipient selon l'une des revendications précédentes, **caractérisé en ce que** le volet de retenue (4), qui est disposé de manière essentiellement parallèle à l'axe de pivotement (20) du couvercle (3), est articulé autour du couvercle (3) de manière à pouvoir pivoter autour d'un axe (38).

7. Dispositif de retenue pour récipient selon l'une des revendications précédentes, **caractérisé en ce que** le couvercle (3) et/ou le volet de retenue (4) sont chargés par la précontrainte d'un ressort, qui font passer le couvercle (3) de la position fermée (21) dans la position ouverte (22) et/ou le volet de retenue (4) d'une position appliquée contre le couvercle (3) dans une position latéralement en saillie par rapport au couvercle (3).

8. Dispositif de retenue pour récipient selon l'une des revendications précédentes, **caractérisé en ce que** le volet de retenue (4) peut être transféré au moyen d'un système de commande forcée ou de guidage forcé, de la position saillante latéralement dans la position appliquée contre le couvercle (3).

9. Dispositif de retenue pour récipient selon l'une des revendications précédentes, **caractérisé en ce que** le volet de retenue pivotant (4) est couplé au couvercle pivotant (3) par l'intermédiaire d'un mécanisme de couplage (16), un pivotement du couvercle (3) de la position ouverte (22) dans la position fermée (21) faisant passer le volet de retenue (4) de la position latéralement en saillie dans la position appliquée contre le couvercle (3).

10. Dispositif de retenue pour récipient selon la revendication 9, **caractérisé en ce que** le mécanisme de couplage (7) est formé par un levier (29) et par un poussoir (28).

11. Dispositif de retenue pour récipient selon la revendication 10, **caractérisé en ce que** le levier (29) est articulé d'une part sur le boîtier (5) et d'autre part sur le poussoir (28), levier qui est guidé de manière à être déplaçable sur une face inférieure du couvercle (3).

12. Dispositif de retenue pour récipient selon la revendication 10 ou 11, **caractérisé en ce que** l'extrémité libre du poussoir (28) attaque un bras de levier (6) de la plaque de retenue (4) et que le bras de levier (6) possède de préférence un élément roulant (30).
